# EUROPEAN PATENT APPLICATION

(11) **EP 4 668 869 A1**
(43) Date of publication of application: **24.12.2025**
(21) Application number: 24775173.8
(22) Date of filing: 19.03.2024
(51) Int. Cl.: H04W 36/38, H04W 36/00, H04W 72/21, H04W 72/231, H04W 72/232, H04W 88/08, H04W 92/20

(54) **METHOD AND DEVICE FOR PROCESSING CONFIGURATION INFORMATION OF LOWER LAYER TRIGGERED MOBILITY IN WIRELESS COMMUNICATION SYSTEM**

(30) Priority: 22.03.2023 KR 20230037502
(71) Applicant: Samsung Electronics Co., Ltd., Suwon-si, Gyeonggi-do 16677 (KR)
(72) Inventor: HWANG, June, Suwon-si, Gyeonggi-do 16677 (KR); JIN, Seungri, Suwon-si, Gyeonggi-do 16677 (KR)
(74) Representative: Gulde & Partner
(86) International application number: PCT/KR2024/003441
(87) International publication number: WO 2024/196125

(57) **Abstract**

The disclosure relates to a 5G or 6G communication system for supporting a higher data transmission rate. A method performed by a terminal in a wireless communication system is provided. The method comprises obtaining, from a base station, an L1/L2 triggered mobility (LTM) reference configuration and one or more LTM candidate configurations; receiving, from the base station, a cell switch command indicating an LTM candidate configuration among the one or more LTM candidate configurations; based on whether a particular indicator is included in the LTM candidate configuration indicated by the cell switch command, determining whether the LTM candidate configuration indicated by the cell switch command is a complete configuration; and in case that the LTM candidate configuration indicated by the cell switch command is not a complete configuration, applying a radio resource control (RRC) reconfiguration message included in the LTM candidate configuration indicated by the cell switch command to the LTM reference configuration.

## Description

### [Technical Field]

The disclosure relates to a wireless communication system. More specifically, the disclosure relates to a method and a device for efficiently transferring configuration information on lower layer triggered mobility to a terminal.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to effectively provide these services.

### [Disclosure]

### [Technical Problem]

The disclosure provides a method and a device for solving a problem of, when a terminal of a wireless communication system is to perform a mobility-related operation triggered by a lower layer, determining a time point of forming a configuration transferred from a network as a complete configuration and a time point of performing a compliance check, and determining a unit of a configuration to be stored in a UE variable.

### [Technical Solution]

According to an embodiment of the disclosure, a method performed by a terminal in a wireless communication system is provided. The method includes obtaining, from a base station, an L1/L2 triggered mobility (LTM) reference configuration and one or more LTM candidate configurations, receiving, from the base station, a cell switch command indicating an LTM candidate configuration among the one or more LTM candidate configurations, based on whether a particular indicator is included in the LTM candidate configuration indicated by the cell switch command, determining whether the LTM candidate configuration indicated by the cell switch command is a complete configuration, and in case that the LTM candidate configuration indicated by the cell switch command is not a complete configuration, applying a radio resource control (RRC) reconfiguration message included in the LTM candidate configuration indicated by the cell switch command to the LTM reference configuration.

According to an embodiment of the disclosure, a method performed by a base station in a wireless communication system is provided. The method includes, according to whether each of one or more LTM candidate configurations is a complete configuration, determining whether to include a particular indicator in each of the one or more LTM candidate configurations, transmitting, to a terminal, an LTM reference configuration and the one or more LTM candidate configurations, and transmitting, to the terminal, a cell switch command indicating an LTM candidate configuration among the one or more LTM candidate configurations. Here, in case that the LTM candidate configuration indicated by the cell switch command is not a complete configuration, a RRC reconfiguration message included in the LTM candidate configuration indicated by the cell switch command is applied to the LTM reference configuration.

According to an embodiment of the disclosure, a terminal in a wireless communication system is provided. The terminal includes a transceiver and a controller coupled to the transceiver. The controller is configured to obtain, from a base station, an LTM reference configuration and one or more LTM candidate configurations, receive, from the base station, a cell switch command indicating an LTM candidate configuration among the one or more LTM candidate configurations, based on whether a particular indicator is included in the LTM candidate configuration indicated by the cell switch command, determine whether the LTM candidate configuration indicated by the cell switch command is a complete configuration, and in case that the LTM candidate configuration indicated by the cell switch command is not a complete configuration, apply an RRC reconfiguration message included in the LTM candidate configuration indicated by the cell switch command to the LTM reference configuration.

According to an embodiment of the disclosure, a base station in a wireless communication system is provided. The base station includes a transceiver and a controller coupled to the transceiver. The controller is configured to, according to whether each of one or more LTM candidate configurations is a complete configuration, determine whether to include a particular indicator in each of the one or more LTM candidate configurations, transmit, to a terminal, an LTM reference configuration and the one or more LTM candidate configurations, and transmit, to the terminal, a cell switch command indicating an LTM candidate configuration among the one or more LTM candidate configurations. Here, in case that the LTM candidate configuration indicated by the cell switch command is not a complete configuration, a RRC reconfiguration message included in the LTM candidate configuration indicated by the cell switch command is applied to the LTM reference configuration.

### [Advantageous Effects]

According to an embodiment of the disclosure, configuration information on lower layer triggered mobility may be efficiently transmitted and managed in a wireless communication system.

### [Description of Drawings]

FIG. 1 illustrates a structure of a typical LTE system.
FIG. 2 illustrates a radio protocol structure of a typical LTE system.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a block diagram illustrating an internal structure of a UE according to an embodiment of the disclosure.
FIG. 6 is a block diagram illustrating a structure of an NR base station according to an embodiment of the disclosure.
FIG. 7 is a sequence diagram illustrating a basic operation related to lower layer triggered mobility.
FIG. 8 is a diagram illustrating a method in which a complete configuration is formed when a reference configuration and a candidate delta configuration are applied according to an embodiment of the disclosure.
FIG. 9 is a flowchart illustrating an operation of a terminal that forms a complete configuration when a reference configuration and a candidate delta configuration are applied according to an embodiment of the disclosure.
FIG. 10 is a diagram illustrating an example of forming a complete configuration when a current RRCReconfiguration message of a terminal is a reference configuration according to an embodiment of the disclosure.
FIG. 11 is a diagram illustrating configurations which may be included in an LTM specific field in an RRCReconfiguration message received by a terminal according to an embodiment of the disclosure.
FIG. 12 is a diagram illustrating a time point at which a terminal attempts to perform a compliance check according to an embodiment of the disclosure.

### [Mode for Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

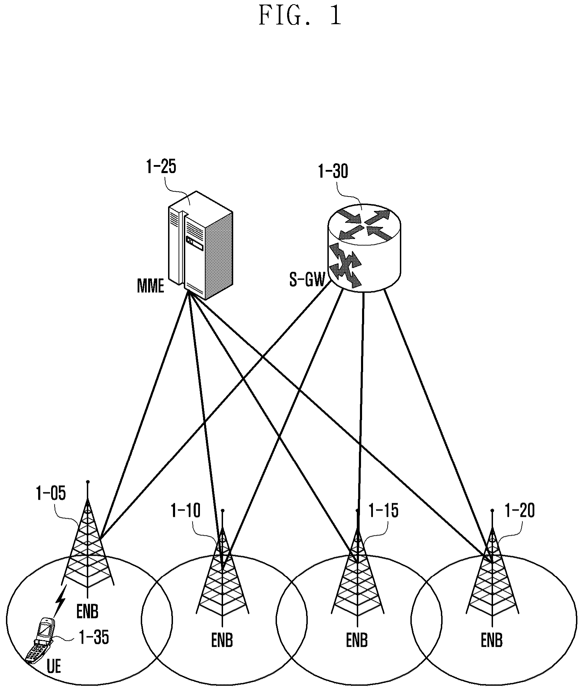

FIG. 1 illustrates a structure of a typical LTE system.

Referring to FIG. 1, as illustrated therein, a radio access network of an LTE system may include next-generation base stations (evolved node Bs, hereinafter ENBs, node Bs, or base stations) 1-05, 1-10, 1-15, and 1-20, a mobility management entity (MME) 1-25, and a serving gateway (S-GW) 1-30. A user equipment (hereinafter UE or terminal) 1-35 may access an external network through the ENBs 1-05 to 1-20 and the S-GW 1-30.

In FIG. 1, the ENBs 1-05 to 1-20 may each correspond to a conventional node B in a UMTS system. The ENBs may be connected to the UE 1-35 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the ENBs 1-05 to 1-20 may serve as the device. In general, one ENB may control multiple cells. For example, in order to implement a transfer rate of 100Mbps, the LTE system may use orthogonal frequency division multiplexing (OFDM) as a radio access technology in a bandwidth of, for example, 20MHz. Furthermore, the LTE system may employ an adaptive modulation & coding (AMC) scheme for determining a modulation scheme and a channel coding rate according to a channel state of a UE. The S-GW 1-30 is a device that provides a data bearer, and may generate or remove a data bearer under the control of the MME 1-25. The MME is a device responsible for various control functions as well as a mobility management function for a UE, and may be connected to multiple base stations.

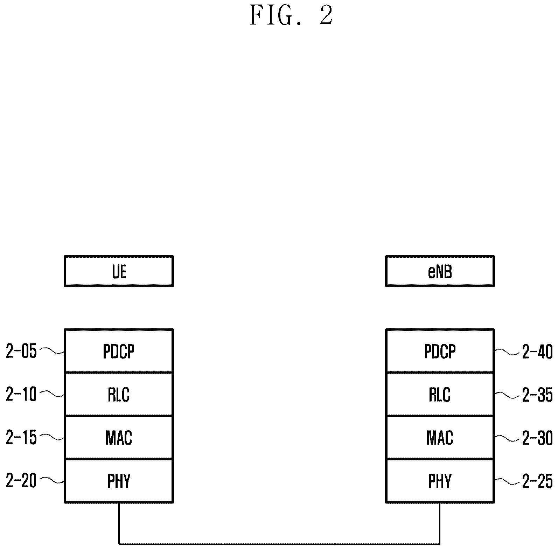

FIG. 2 illustrates a radio protocol structure of a conventional LTE.

Referring to FIG. 2, a radio protocol of an LTE system may include a packet data convergence protocol (PDCP) 2-05 or 2-40, a radio link control (RLC) 2-10 or 2-35, and a medium access control (MAC) 2-15 or 2-30 on each of UE and ENB sides. The PDCP may serve to perform operations such as IP header compression/reconstruction. The main functions of the PDCP may be summarized as follows.
- Header compression and decompression: robust header compression (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 2-10 or 2-35 may reconfigure a PDCP protocol data unit (PDU) into an appropriate size to perform an ARQ operation. The main functions of the RLC may be summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 may be connected to several RLC layer devices configured in a single terminal, and multiplex RLC PDUs into a MAC PDU and demultiplex a MAC PDU into RLC PDUs. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

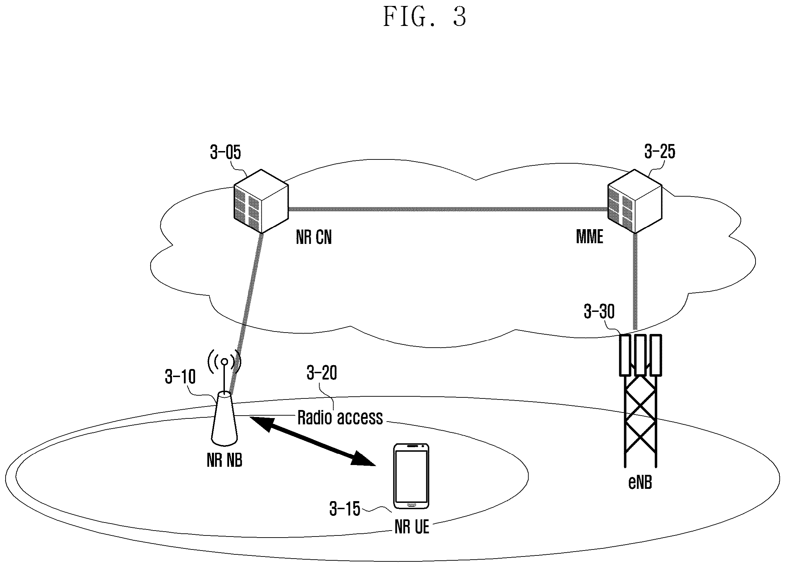

FIG. 3 illustrates a structure of a next-generation mobile communication system.

Referring to FIG. 3, a radio access network of a next-generation mobile communication system (hereinafter NR or 5G) may include a new radio node B (hereinafter NR gNB or NR base station) 3-10, and a new radio core network (NR CN) 3-05. A new radio user equipment (NR UE or NR terminal) 3-15 may access an external network via the NR gNB 3-10 and the NR CN 3-05.

In FIG. 3, the NR gNB 3-10 may correspond to an evolved node B (eNB) of a conventional LTE system. The NR gNB may be connected to the NR UE 3-15 through a radio channel and provide outstanding services as compared to a conventional node B. In the next-generation mobile communication system, since all user traffic may be serviced through a shared channel. Thus, a device that collects state information, such as buffer states, available transmit power states, and channel states of UEs, and performs scheduling accordingly is required, and the NR gNB 3-10 may be responsible for the scheduling. In general, one NR gNB may control multiple cells. In order to implement ultrahigh-speed data transfer beyond the current LTE, the next-generation mobile communication system may provide a wider bandwidth than the existing maximum bandwidth. in addition, the next-generation mobile communication system may employ an orthogonal frequency division multiplexing (OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 3-05 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN may be connected to an MME 3-25 via a network interface. The MME may be connected to an eNB 3-30 that is an LTE base station.

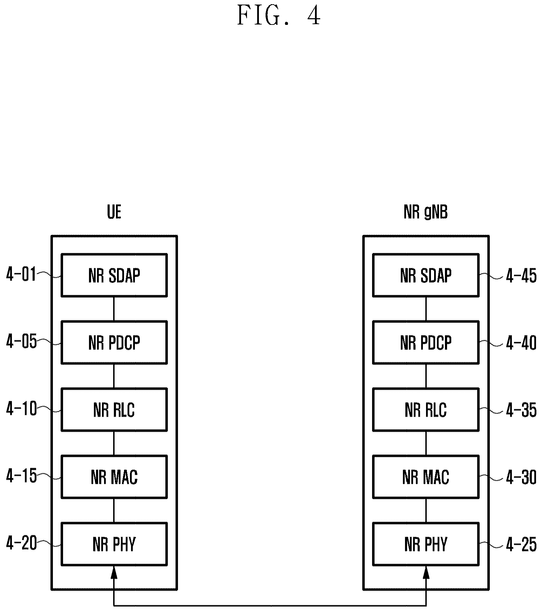

FIG. 4 illustrates a radio protocol structure of a next-generation mobile communication system to which the disclosure is applicable.

Referring to FIG. 4, a radio protocol of a next-generation mobile communication system may include an NR service data adaptation protocol (SDAP) 4-01 or 4-45, an NR PDCP 4-05 or 4-40, an NR RLC 4-10 or 4-35, an NR MAC 4-15 or 4-30, and an NR PHY 4-20 or 4-25 on each of UE and NR base station sides.

The main functions of the NR SDAP 4-01 or 4-45 may include some of functions below.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 4-05 or 4-40 may include some of functions below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Among the above-described functions, the reordering of the NR PDCP device may refer to a function of reordering PDCP PDU received from a lower layer in an order based on PDCP sequence numbers (SNs). The reordering of the NR PDCP device may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, and may include a function of requesting retransmission of lost PDCP PDUs.

The main functions of the NR RLC 4-10 or 4-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device may refer to a function of, if there is a lost RLC PDU, delivering only RLC SDUs before the lost RLC PDU to the upper layer in sequence. If one original RLC SDU is divided into several RLC SDUs and the RLC SDUs are received, the in-sequence delivery function of the NR RLC device may include a function of reassembling the several RLC SDUs and transferring the reassembled RLC SDUs.

The in-sequence delivery function of the NR RLC device may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, and may include a function of requesting retransmission of lost RLC PDUs.

The in-sequence delivery of the NR RLC device may refer to a function of, if there is a lost RLC PDU, delivering only RLC SDUs before the lost RLC PDU to the upper layer in sequence.

The in-sequence delivery of the NR RLC device may include a function of, although there is a lost RLC SDU, if a predetermined timer has expired, sequentially transferring, to a higher layer, all the RLC SDUs received before the timer is started.

The in-sequence delivery of the NR RLC device may include a function of, although there is a lost RLC SDU, if a predetermined timer has expired, sequentially transferring all the RLC SDUs received up to the current, to a higher layer.

The NR RLC device may process RLC PDUs in a reception sequence, regardless of a sequence based on sequence numbers (out-of-sequence delivery). and then deliver the processed RLC PDUs to the NR PDCP device.

If receiving segments, the NR RLC device may receive segments stored in a buffer or to be received in the future, reconfigure the segments into one whole RLC PDU, process the RLC PDU, and then deliver the processed RLC PDU to the NR PDCP device.

The NR RLC layer may not include the concatenation function, which may be performed in the NR MAC layer or replaced with a multiplexing function of the NR MAC layer.

Among the above-described functions, the out-of-sequence delivery of the NR RLC device may refer to a function of instantly delivering RLC SDUs received from the lower layer to the upper layer regardless of the order. The out-sequence delivery of the NR RLC device may include a function of, if one original RLC SDU is segmented into multiple RLC SDUs and the segmented RLC SDUs are received, reassembling the RLC SDUs and delivering the reassembled RLC SDUs. The out-of-sequence delivery function of the NR RLC device may include a function of storing RLC SNs or PDCP SNs of received RLC PDUs and arranging the order thereof to record lost RLC PDUs.

The NR MAC 14-15 or 4-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

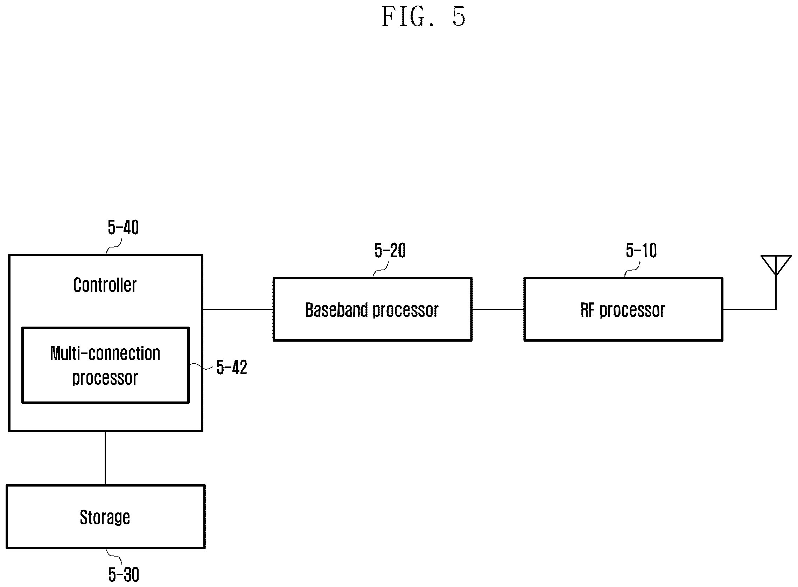

FIG. 5 is a block diagram illustrating a structure of a UE according to an embodiment of the disclosure.

Referring to the drawing, the UE may include a radio frequency (RF) processor 5-10, a baseband processor 5-20, a storage 5-30, and a controller 5-40.

The RF processor 5-10 may perform functions for transmitting/receiving signals through a radio channel, such as signal band conversion and amplification. The RF processor 5-10 may up-convert a baseband signal provided from the baseband processor 5-20 to an RF band signal, may transmit the same through an antenna, and may down-convert an RF band signal received through the antenna to a baseband signal. For example, the RF processor 5-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 5-10 may include multiple RF chains. Furthermore, the RF processor 5-10 may perform beamforming. For the beamforming, the RF processor 5-10 may adjust the phase and magnitude of signals transmitted/received through multiple antennas or antenna elements, respectively. In addition, the RF processor may perform MIMO, and may receive multiple layers when performing a MIMO operation.

The baseband processor 5-20 may perform functions of conversion between baseband signals and bitstrings according to the physical layer specifications of the system. For example, during data transmission, the baseband processor 5-20 may encode and modulate a transmitted bitstring to generate complex symbols. In addition, during data reception, the baseband processor 5-20 may demodulate and decode a baseband signal provided from the RF processor 5-10 to restore a received bitstring. For example, when following the orthogonal frequency division multiplexing (OFDM) scheme, during data transmission, the baseband processor 5-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 5-20 may split a baseband signal provided from the RF processor 5-10 at the OFDM symbol level, may restore signals mapped to subcarriers through a fast Fourier transform (FFT) operation, and may restore a received bitstring through demodulation and decoding.

The baseband processor 5-20 and the RF processor 5-10 may transmit and receive signals as described above. Therefore, the baseband processor 5-20 and the RF processor 5-10 may be referred to as a transmitter, a receiver, a transceiver, or a communication unit. Furthermore, at least one of the baseband processor 5-20 and the RF processor 5-10 may include multiple communication modules to support multiple different radio access technologies. In addition, at least one of the baseband processor 5-20 and the RF processor 5-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 5-30 may store basic programs, application programs, and data, such as configuration information, for operation of the main base station. Particularly, the storage 5-30 may store information regarding a second access node configured to perform wireless communication by using a second radio access technology. In addition, the storage 5-30 may provide the stored data at the request of the controller 5-40.

The controller 5-40 controls the overall operation of the UE. For example, the controller 5-40 may transmit/receive signals through the baseband processor 5-20 and the RF processor 5-10. In addition, the controller 5-40 records data in the storage 5-30 and reads the data from the storage 5-30. To this end, the controller 5-40 may include at least one processor. For example, the controller 5-40 may include a communication processor (CP) configured to perform control for communication, and an application processor (AP) configured to control upper layers such as application programs.

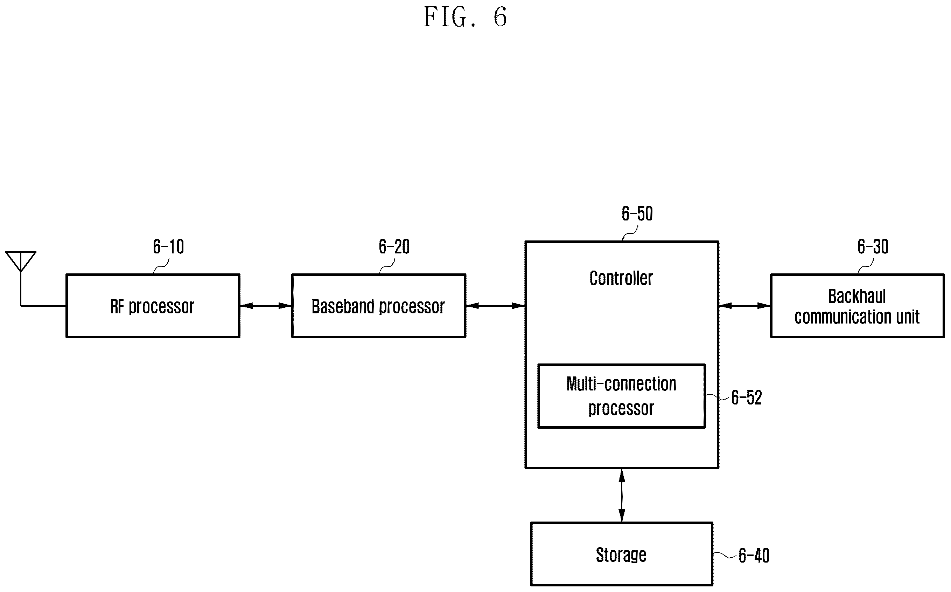

FIG. 6 is a block diagram illustrating a structure of an NR base station according to an embodiment of the disclosure.

As illustrated in the drawing, the base station may include an RF processor 6-10, a baseband processor 6-20, a backhaul communication unit 6-30, a storage 6-40, and a controller 6-50.

The RF processor 6-10 may perform functions for transmitting/receiving signals through a radio channel, such as signal band conversion and amplification. The RF processor 6-10 may up-convert a baseband signal provided from the baseband processor 6-20 to an RF band signal, may transmit the same through an antenna, and may down-convert an RF band signal received through the antenna to a baseband signal. For example, the RF processor 6-10 may include a transmission filter, a reception filter, an amplifier, a mixer, an oscillator, a DAC, and an ADC. Although only one antenna is illustrated in the drawing, the first access node may include multiple antennas. In addition, the RF processor 6-10 may include multiple RF chains. Furthermore, the RF processor 6-10 may perform beamforming. For the beamforming, the RF processor 6-10 may adjust the phase and magnitude of signals transmitted/received through multiple antennas or antenna elements, respectively. The RF processor may transmit one or more layers to perform a downward MIMO operation.

The baseband processor 6-20 may perform functions of conversion between baseband signals and bitstrings according to the physical layer specifications of first radio access technology. For example, during data transmission, the baseband processor 6-20 may encode and modulate a transmitted bitstring to generate complex symbols. In addition, during data reception, the baseband processor 6-20 may demodulate and decode a baseband signal provided from the RF processor 6-10 to restore a received bitstring. For example, when following the OFDM scheme, during data transmission, the baseband processor 6-20 may encode and modulate a transmitted bitstring to generate complex symbols, may map the complex symbols to subcarriers, and may configure OFDM symbols through IFFT operation and CP insertion. In addition, during data reception, the baseband processor 6-20 may split a baseband signal provided from the RF processor 6-10 at the OFDM symbol level, may restore signals mapped to subcarriers through FFT operation, and may restore a received bitstring through demodulation and decoding. The baseband processor 6-20 and the RF processor 6-10 may transmit and receive signals as described above. Therefore, the baseband processor 6-20 and the RF processor 6-10 may be referred to as a transmitter, a receiver, a transceiver, or a communication unit.

The backhaul communication unit 6-30 provides an interface for communicating with other nodes in the network. The backhaul communication unit 6-30 converts bitstrings transmitted from the main base station to other nodes, for example, an auxiliary base station, a core network, etc., into physical signals, and converts physical signals received from the other nodes into bitstrings.

The storage 6-40 may store basic programs, application programs, and data, such as configuration information, for operation of the main base station. Particularly, the storage 6-40 may store information regarding a bearer allocated to a connected UE, a measurement result reported from the connected UE, and the like. In addition, the storage 6-40 may store information serving as criteria for determining whether to provide multi-connection to a UE or to suspend the same. In addition, the storage 6-40 may provide the stored data at the request of the controller 6-50.

The controller 6-50 controls the overall operation of the main base station. For example, the controller 6-50 transmits/receives signals through the baseband processor 6-20 and the RF processor 6-10 or through the backhaul communication unit 6-30. In addition, the controller 6-50 records data in the storage 6-40 and reads the data from the storage 6-40. To this end, the controller 6-50 may include at least one processor.

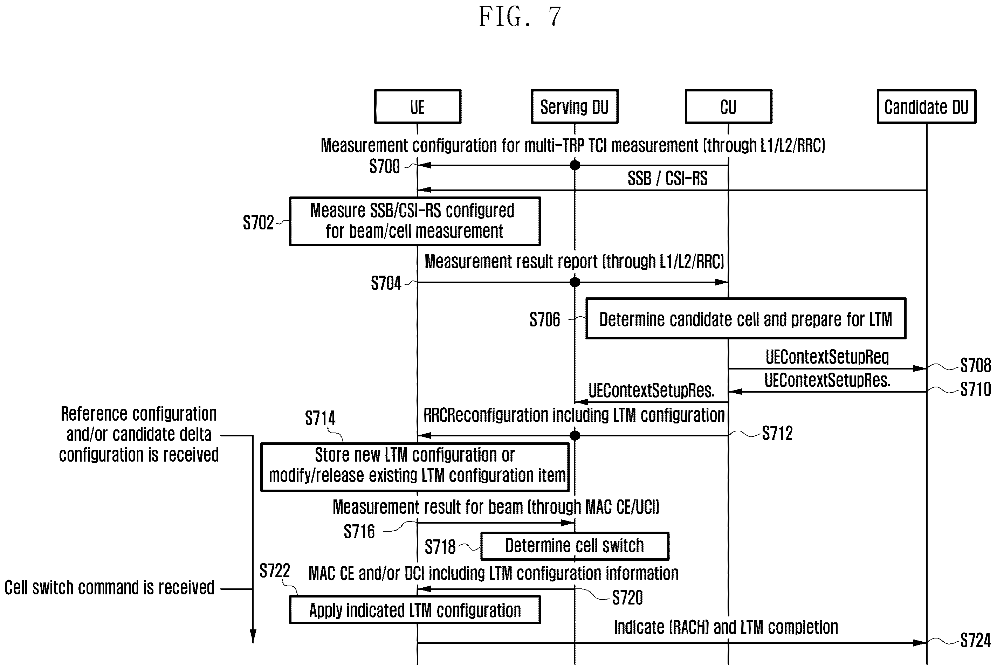

FIG. 7 is a sequence diagram illustrating a basic operation related to lower layer triggered mobility.

Referring to FIG. 7, a base station operating a serving cell of a UE may be divided into a central unit (CU) and a distributed unit (DU) at a network node. The UE may establish a connection state with a cell provided by a serving DU under the CU.

In operation S700, the CU may transfer, to the UE and via the serving DU, beam/cell measurement configuration information for multiple transmission/reception points (TRPs). The measurement configuration information may be transferred using RRC/MAC/DCI, and may transfer, for example, a cell/beam to be measured, a time/frequency region to be measured, a value (quantity) to be measured (e.g., RSRP, RSRQ, SINR, etc.), and/or a condition for reporting a measurement result to a network.

In operation S702, the UE having received the measurement configuration information may measure a given measurement target, for example, a synchronization signal block (SSB) and/or channel state information reference signal (CSI-RS) transmitted from a TRP. In operation S704, if a measurement result of a cell and/or beam to be measured meets a measurement result reporting condition included in a reporting configuration, the UE may report the measurement result to the base station. The measurement result reported by the UE may be transferred using uplink control information (UCI), a MAC layer control message (MAC control element (MAC CE)), or an uplink RRC message.

In operation S706, the CU having received a measurement result report may determine a candidate cell(s) for lower layer triggered mobility or L1/L2 triggered mobility (LTM).

In operation S708, the CU may transmit a request for LTM handover to a DU (candidate DU) operating the determined candidate cell. For example, the CU may transmit a request for LTM handover to the candidate DU through an UEcontextSetupRequest message. In operation S708, the candidate DU having received an LTM handover request may accept or reject the request.

In operation S710, if the candidate DU has accepted the LTM handover request, the candidate DU may include configuration information to be used in the corresponding candidate target cell in an acceptance message and transfer the message to the CU. For example, the candidate DU may transfer, to the CU, a UEcontextSetupResponse message including the configuration information to be used in the candidate target cell. The information transferred by the candidate DU may include cell group configuration information (cell group configuration) to be used in the candidate target cell.

In operation S712, the CU may receive a cell group configuration of the candidate target cell, then add configuration information (e.g., radio bearer configuration, measurement configuration, etc.) managed by the CU, and transfer complete configuration information on a particular candidate target cell to the UE via the serving cell of the serving DU.

Before or after operation S712 is performed, the CU may notify the serving DU that an LTM configuration for a particular candidate target cell is transferred to the UE. The serving DU may store information on the corresponding candidate target cell(s).

In operation S714, the UE having received configuration information on a particular candidate target cell from the CU may store the corresponding information. If there is LTM configuration information pre-stored in the UE, the UE may modify or release the pre-stored LTM configuration information.

In operation S716, the UE may transfer a measurement result report to the network when a condition according to a pre-transferred measurement configuration is satisfied (or at a configured time). The UE may transfer the measurement result through a UCI/MAC CE message and may transfer the signal strength of another cell and/or the signal strength of a beam of another cell. In operation S718, the serving DU having received the measurement result report may command/determine a cell switch to one of the LTM candidate target cells previously configured for the UE by the CU if necessary. In this case, in operation S720, the serving DU may indicate/command a cell switch to a particular target cell by transmitting a MAC CE and/or downlink control information (DCI).

If the cell switch is indicated to the UE, the UE may perform handover to the target cell by applying an LTM configuration of the target cell, which is indicated together, in operation S722. In this case, in operation S724, the UE may perform a random access procedure for the target cell, and if the random access has been successfully completed, the UE may transmit an indicator indicating LTM performance completion to the target cell through a UCI/MAC CE/UL RRC message.

Embodiments described in the disclosure may be described based on the following assumption.
- A candidate cell configuration to be used in a candidate target cell for LTM by the UE may be in a unit of an RRCReconfiguration message.
- If the UE receives a cell switch command, configuration information applied by the UE may be RRCReconfiguration for LTM. As described above, RRCReconfiguration for LTM to be applied by the UE may be referred to as a complete configuration.
- When the complete configuration is transmitted by the network, the network may directly transfer it to the UE, or may configure a combination of a reference configuration and a candidate delta configuration and transfer the combination.
- If the network uses a separate reference configuration and a candidate delta configuration, a complete configuration is formed by applying the candidate delta configuration over the reference configuration.
- A complete configuration is applied to the UE when a cell switch is performed according to the cell switch being commanded, and may substitute for an existing configuration of the UE. In this case, an RRC reconfiguration procedure may be applied, but RLC or PDCP may not be reset.

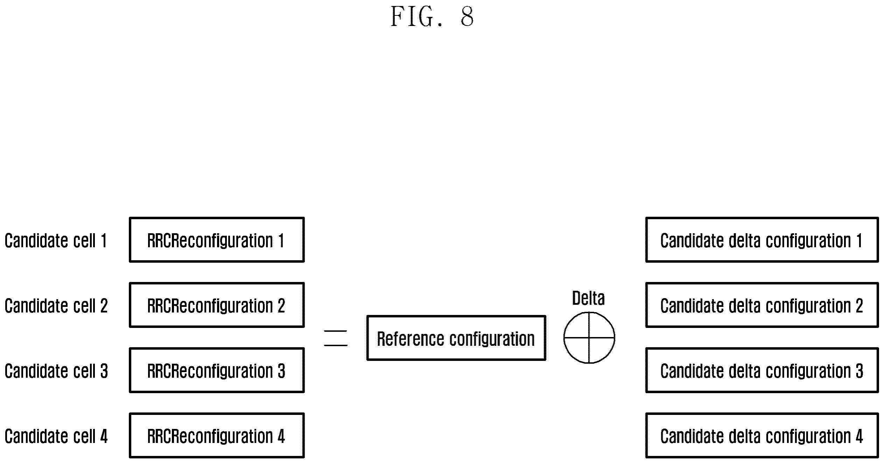

FIG. 8 is a diagram illustrating a method in which a complete configuration is formed when a reference configuration and a candidate delta configuration are applied according to an embodiment of the disclosure.

Referring to FIG. 8, in a case where a reference configuration is given, one or more reference configurations may be given to the UE, and a separate candidate delta configuration corresponding to each candidate target cell may be transferred. The UE may form a complete configuration at a particular time point using the configurations transferred in this structure. In this case, the UE may form one complete configuration by applying a candidate delta configuration associated with a particular candidate target cell, as a delta configuration, to one reference configuration, and the complete configuration may be used for the candidate target cell associated with the candidate delta configuration.

In the disclosure, when the above method using a reference configuration and a candidate delta configuration is applied, which information/parameter(s) is included in the reference configuration, and various methods for deriving a complete configuration in the UE accordingly are described.

In an embodiment, multiple reference configurations or a single reference configuration may be configured for the UE by the CU. For example, if multiple reference configurations are used, a slight signaling overhead may occur to maintain the multiple reference configurations. However, when the number of candidate target cells is relatively large, the signaling size of candidate delta configurations may be small. As another example, if a single reference configuration is used, a final delta and/or entire configuration size may be large, but the overhead for reference configuration management may be small.

### <Method A>

If multiple reference configurations are applied, each reference configuration may be assigned a predetermined ID. A corresponding ID is included in each reference configuration or IDs and reference configurations are included together in a separate field so that each ID and a corresponding reference configuration being associated may be indicated. For example, an ID for each reference configuration may be allocated by the CU.

In addition, each candidate delta configuration transferred to the UE includes an ID indicating a reference configuration required to be combined therewith, or IDs and candidate delta configurations are included together in a separate field so that a reference configuration indicated by each ID and a corresponding candidate delta configuration being required to be combined may be indicated.

The network may use an ID of a corresponding reference configuration for addition, modification, and/or release operations for the configuration. For example, if a reference configuration is a reference configuration not previously stored in the UE, the UE may add and store the reference configuration in a storage variable (UE variable). As another example, if an ID of a reference configuration previously stored in the UE is the same as an ID of a newly transferred reference configuration, the UE may modify the pre-stored reference configuration to the newly transferred reference configuration. As yet another example, if the network transfers an ID of a reference configuration together with an indication of "release," the UE may erase a pre-stored reference configuration corresponding to the ID.

According to an embodiment, when the network transfers a candidate delta configuration to the UE, if the network does not transfer an ID field indicating a reference configuration combined with the candidate delta configuration (the network indicates the ID field indicating the reference configuration as absent), includes an indicator indicating not to use a reference configuration for the candidate delta configuration, or includes an indicator indicating that the candidate delta configuration is a full configuration, the UE may recognize that the candidate delta configuration is not combined with a reference configuration and is a complete configuration by itself.

### <Method B>

If a reference configuration is applied, the network may indicate addition, modification, or release of the single reference configuration. In this case, an ID is not used, and addition, modification, or release of the single reference configuration itself may be indicated. The UE may store the single reference configuration in a storage variable.

According to an embodiment, when the network transfers a candidate delta configuration to the UE, if the network includes an indicator indicating not to use a reference configuration for the candidate delta configuration, or includes an indicator indicating that the candidate delta configuration is a full configuration, the UE may recognize that the candidate delta configuration is not combined with a reference configuration and is a complete configuration by itself.

In the above methods A and B, at least one or a combination of the following methods may be applied to transfer a reference configuration(s).

Method 1. A reference configuration may reuse a part or entirety of current configuration information of the UE, and the network may transmit, to the UE, an indicator indicating reuse of a part or entirety of the current configuration information of the UE.

Method 1-1: The outermost RRCReconfiguration message generated by an MN and transferred through SRB1 may include a particular indicator (e.g., a 1-bit indicator). In this case, the position of the indicator in the RRCReconfiguration message may be at the same hierarchy of a cell group configuration field or outside the cell group configuration field (e.g., the shallowest field position of the RRCReconfiguration message).

If Method 1-1 is followed, a reference configuration may actually indicate an RRCReconfiguration configuration itself generated by a corresponding MN.

In this case, a delta combination method may be applied to a candidate delta configuration. For example, an unnecessary configuration for all fields in the RRCReconfiguration may be indicated as absent, a value of a corresponding field is explicitly added with respect to a configuration required to be added, and configurations required to be changed may be indicated with different values. (Candidate delta config would have baseline of outer RRCReconfig, i.e., can include MCG and/or SCG and/or radioBearer config and/or measConfig)

Table 1 is an example of an ASN.1 structure of an RRCReconfiguration message according to Method 1-1.

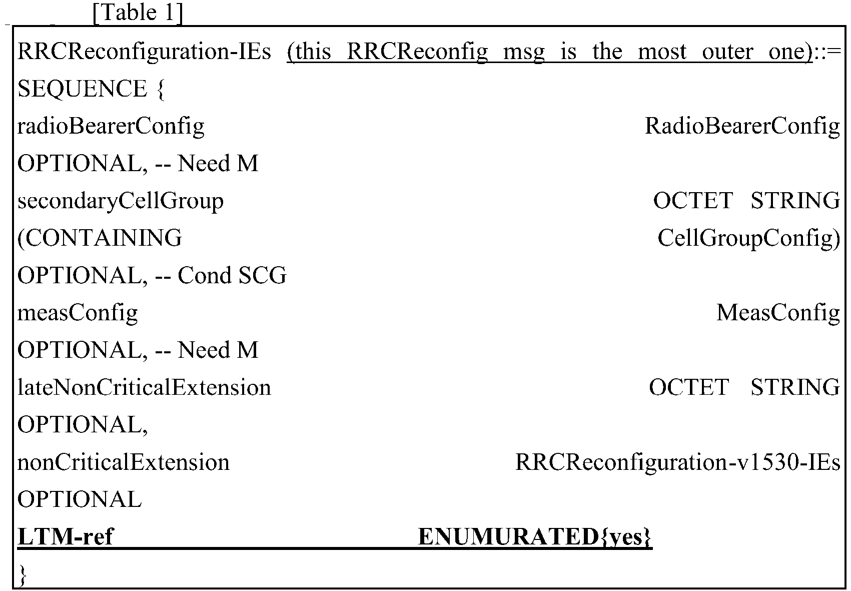

"LTM-ref" in Table 1 above may indicate that RRCReconfiguration including same is used as a reference configuration.

Method 1-2: A particular indicator (e.g., a 1-bit indicator) may be included in the shallowest field position of a cell group configuration field.

Table 2 is an example of an ASN.1 structure of a cell group configuration field according to Method 1-2.

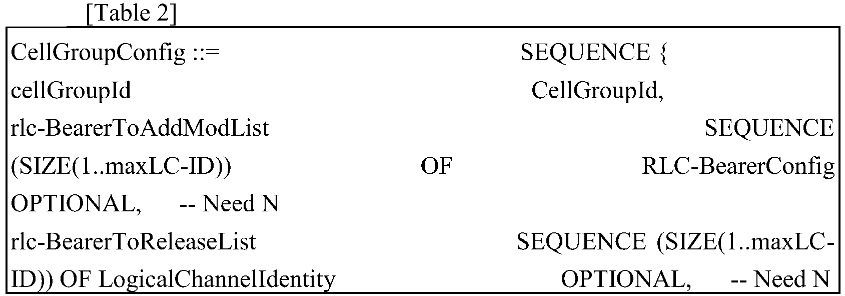

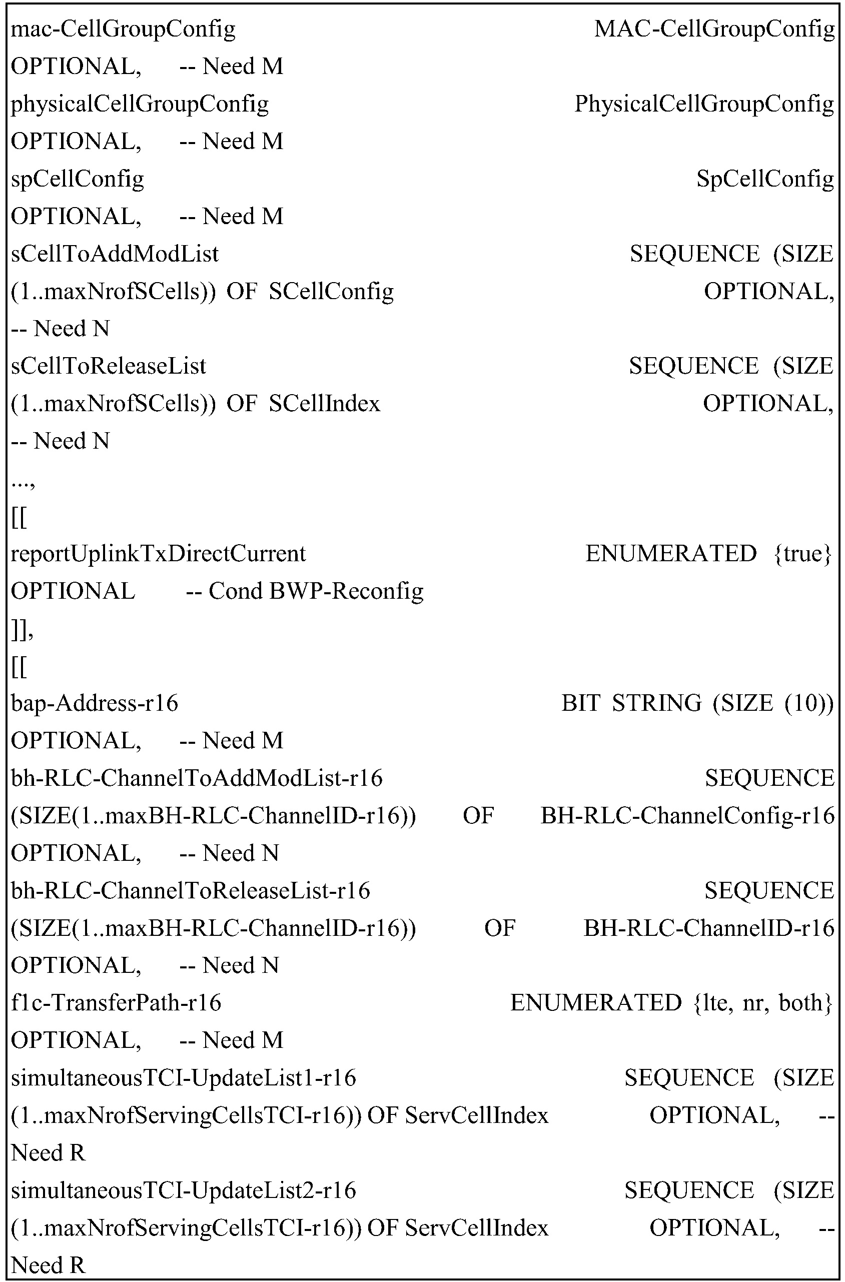

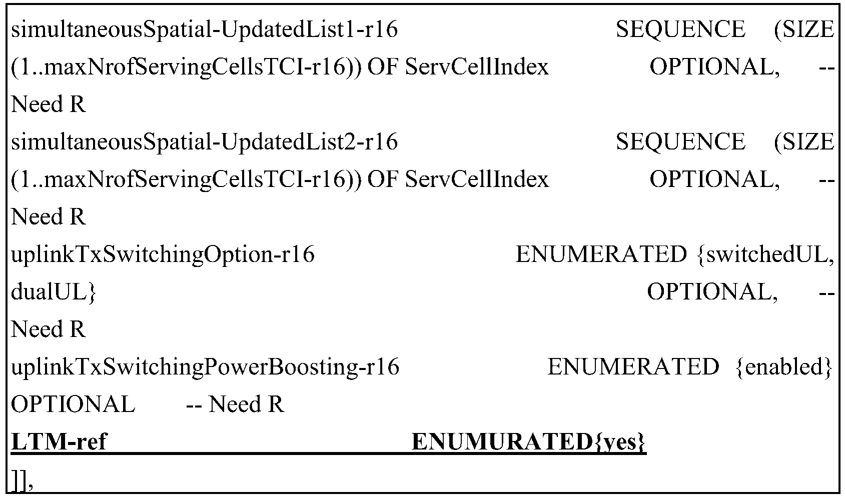

"LTM-ref" in Table 2 above may indicate that a cell group configuration including same is used as a reference configuration.

According to Method 1-2, a cell group configuration corresponding to a master cell group (MCG) and/or a cell group configuration corresponding to a secondary cell group (SCG) may be reference configurations, respectively. For example, the hierarchy of a cell group configuration corresponding to an MCG and/or SCG in an RRCReconfiguration and the content thereof may correspond to a reference configuration. In addition, in a case of a candidate delta configuration, since configurations not included in a cell group configuration may be assumed to be absent, corresponding fields may be required to be included if necessary.

If a dual connectivity (DC) configuration is impossible in a target cell for the UE, according to Method 1-2, only a cell group configuration corresponding to a current MCG of the UE may be used as a reference configuration. For example, even if a cell group configuration corresponding to an SCG includes a reference indicator (e.g., LTM-ref), the UE may consider that the indicator is absent when forming a complete configuration.

If a DC configuration is possible in a target cell for the UE, respective cell group configurations corresponding to a current MCG and SCG may be reference configurations. In a case of candidate delta config, since both the cell group configurations corresponding to an MCG and SCG are required to be considered as reference configurations, the reference configuration for each cell group configuration may be required to include a configuration of releasing an unnecessary field and adding a necessary field.

In Method 1-2, the more the candidate target cells in one DU, the smaller the signaling overhead.

Method 1-3: A particular indicator (e.g., a 1-bit indicator) may be included in configuration information (spcell configuration) for a special cell (SpCell).

In Method 1-3, the indicator may be included in an spcell configuration field of each MCG and/or SCG.

Similarly, the hierarchy of an spcell configuration in an RRCReconfiguration message and the configuration content of the spcell configuration may correspond to a reference configuration. Accordingly, a candidate delta configuration may include a configuration of releasing unnecessary content and adding necessary content, based on the configuration content of a current spcell configuration of the UE. In addition, all the pieces of information not included in an spcell configuration field may be required to be included in the candidate delta configuration if necessary.

In Method 1-3, if carrier aggregation (CA) is not configured for the UE, a relatively large number of configurations may be transferred using the same spcell configuration, and thus signal overhead may be reduced.

Method 1-4: A radio bearer configuration and/or measurement configuration may be a reference configuration, and each field may include an indicator indicating a reference configuration. As another method, without the indicator, a configuration of an independent separate radio bearer configuration and/or measurement configuration may be indicated.

Table 3 is an example of an ASN.1 structure of a radio bearer configuration and a measurement configuration according to Method 1-4.

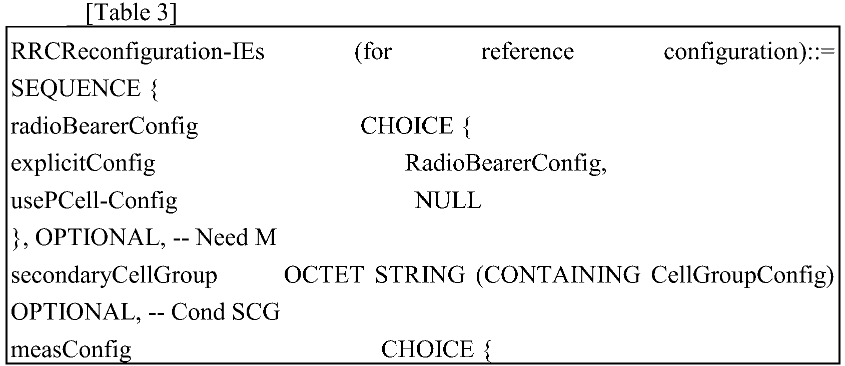

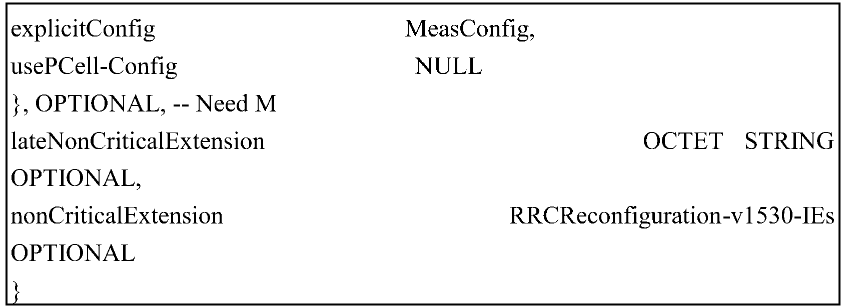

"usePcell-Config" in Table 3 above may indicate that a current radio bearer configuration and/or a current measurement configuration of the UE is used as a reference configuration. If Table 3 above includes explicitconfig, a separate radio bearer configuration irrelevant to a current configuration of the UE and/or a separate measurement configuration irrelevant to a current measurement configuration of the UE may be configured for the UE.

Among Methods 1-1 to 1-4 above, if an LTM reference configuration indicator is not present in any of the current configurations of the UE, the UE may consider candidate delta configurations as complete configurations.

Method 2: Which part among the current configurations of the UE is used as a reference configuration may be indicated in an LTM specific field.

For example, at least one or a combination of the following examples may be indicated to the UE.
{Current UE's RRCReconfiguration applied,
and/or current UE's MCG configuration applied,
and/or current UE's SCG configuration applied,
and/or current UE's spcell configuration (which further indicated with MCG or SCG).
and/or current radioBearerConfig
and/or current measConfig}

Based on a current configuration of the UE according to the unit, the network may configure a candidate delta configuration by adding all required fields other than the unit, including changed values for fields required to be changed among the fields within the unit, and configuring fields required to be released as absent.

Method 3. A reference configuration may be transferred to the UE as a separate configuration regardless of a current configuration of the UE. According to Method 3, a separate configuration may be included in an LTM specific field and transferred, and may be included in a separate field referred to as a reference configuration, or may be associated with a separate indicator.

If a field including a reference configuration is indicated as absent in the LTM specific field, the UE may consider a corresponding candidate delta configuration as a complete configuration not requiring a delta configuration.

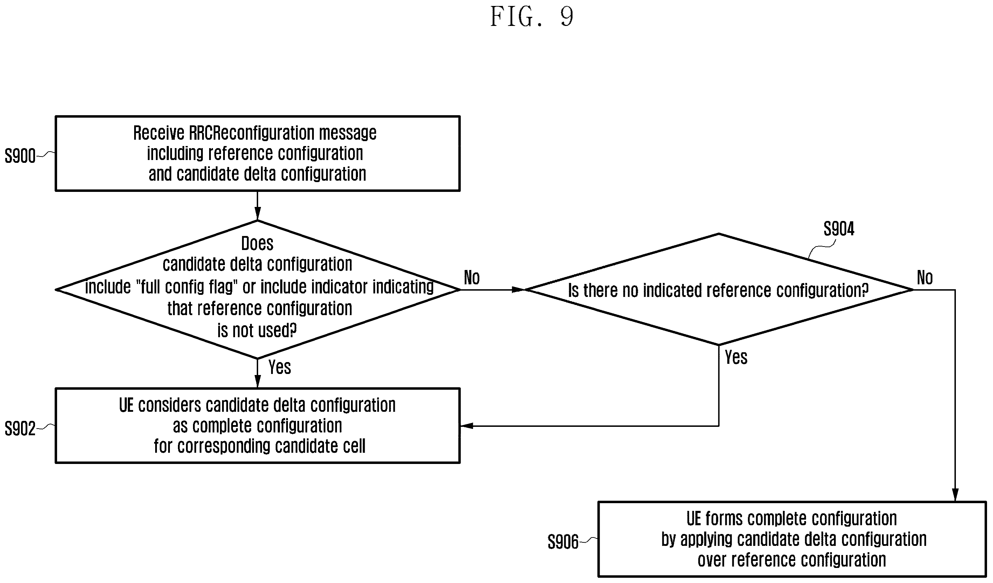

FIG. 9 is a flowchart illustrating an operation of a UE that forms a complete configuration when a reference configuration and a candidate delta configuration are applied according to an embodiment of the disclosure.

Referring to FIG. 9, in operation S900, a UE may receive an RRCReconfiguration message. The RRCReconfiguration message received by the UE may include both a reference configuration and a candidate delta configuration.
* If with respect to a particular candidate cell configuration, a candidate delta configuration includes a full configuration flag or an indicator indicating not to use a reference configuration, in operation S902, the UE may consider the corresponding candidate delta config as a complete configuration.
* Otherwise (if a full configuration flag or an indicator indicating not to use a reference configuration is not included), in operation S904, the UE may identify whether a reference configuration exists again.
** If there is no reference configuration, in operation S902, the UE may consider the corresponding candidate delta config as a complete configuration.
** If a reference configuration exists, in operation S906, the UE may form a complete candidate configuration by applying the candidate delta configuration to the reference configuration.

The above operations of the UE may be repeated for each candidate target cell.

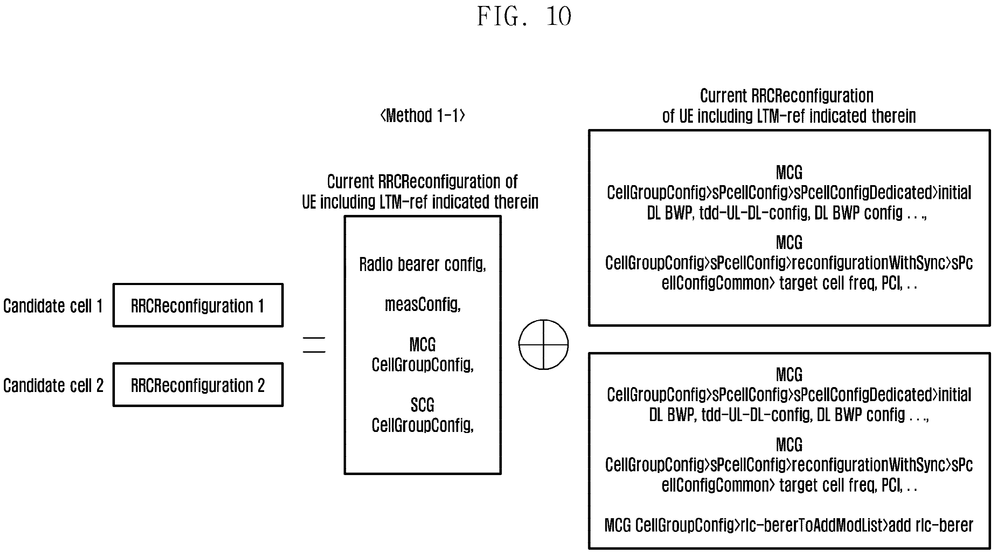

FIG. 10 is a diagram illustrating an example of forming a complete configuration when a current RRCReconfiguration message of a UE is a reference configuration according to an embodiment of the disclosure.

Referring to FIG. 10, a case (Method 1-1) in which a UE receives a reference configuration, and a reference configuration indicator is included in an RRCReconfiguration message received as a current configuration of a UE is assumed. In addition, it is assumed that an LTM candidate delta configuration received together with the reference configuration includes a candidate delta configuration for each of candidate cell 1 and candidate cell 2 and is configured for the UE.

In a case of candidate cell 1, the UE may use configurations including measConfig and radioBearer config included in the current RRCReconfiguration message without change, change parameters of initial DL BWP, tdd-UL-DL-config, and DL BWP config in an MCG CellGroupConfig > sPcellConfig > sPcellConfigDedicated field to parameters for candidate cell 1, and change parameters of target cell freq and a PCI in an MCG CellGroupConfig > sPcellConfig > reconfigurationWithSync > sPcellConfigCommon field to freq and a PCI of candidate cell 1, thereby finally considering the configurations as a complete configuration of candidate cell 1.

In a case of candidate cell 2, the UE may use configurations including measConfig and radioBearer config included in the current RRCReconfiguration message without change, change parameters of initial DL BWP, tdd-UL-DL-config, and DL BWP config in an MCG CellGroupConfig > sPcellConfig > sPcellConfigDedicated field to parameters for candidate cell 2, change parameters of target cell freq and a PCI in an MCG CellGroupConfig > sPcellConfig > reconfiguration WithSync > sPcellConfigCommon field to freq and a PCI of candidate cell 2, and additionally add MCG CellGroupConfig>rlc-bearerToAddModList>add rlc-bearer, that is, an RLC bearer, thereby finally considering the configurations as a complete configuration of candidate cell 2.

As described above, a method for a case of forming a complete configuration by a UE according to various embodiments of the disclosure has been described. Hereinafter, a method of determining a time point at which the UE forms the complete configuration is described. From the UE's perspective, the UE performs a compliance check on a received or configured RRCReconfiguration message, and if the UE fails to apply a corresponding configuration, the UE need to initiate a failure handling procedure. It is required to determine when the UE performs the compliance check, and which unit is used to store a configuration in a UE variable.

There may be the following three schemes for a time point of forming a complete configuration by a UE.
- Scheme 1: The UE may form a complete configuration according to the above methods at a time point at which a candidate delta configuration is received.
- Scheme 2: After receiving a candidate delta configuration, the UE may form a complete configuration according to the above methods at a time point at which a cell switch command is received.
- Scheme 3: The UE may form a complete configuration according to the above methods at any time point according to a UE implementation before a cell switch command is received after a candidate delta configuration is received (between the time that candidate delta config is received and the time that cell switch command is received, but the exact time is up to the UE implementation).

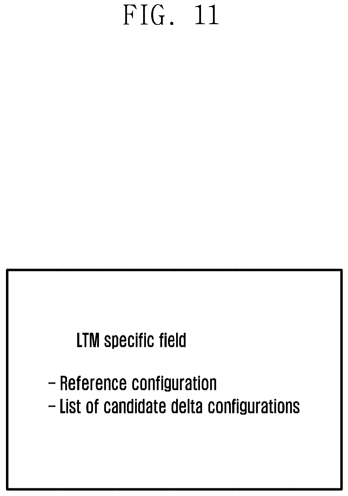

FIG. 11 is a diagram illustrating configurations which may be included in an LTM specific field in an RRCReconfiguration message received by a UE according to an embodiment of the disclosure.

A UE may store reference configurations in a storage variable. Then, with respect to Schemes 1, 2, and 3, the UE may store a candidate delta configuration or a completed complete configuration in the storage variable. An operation of the UE for each storage variable will be described.

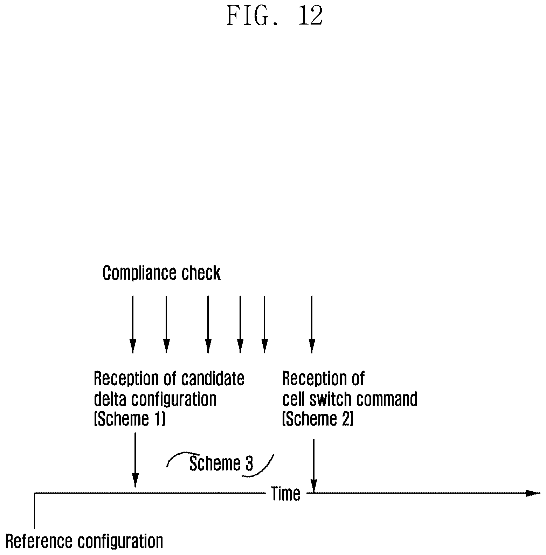

FIG. 12 is a diagram illustrating a time point at which a UE attempts to perform a compliance check according to an embodiment of the disclosure.

A UE may basically perform a compliance check after a complete configuration is formed. Therefore, the above Schemes 1, 2, and 3 described for a time point of forming a complete configuration may be applied to correspond to a time point of performing a compliance check described below. However, a detailed operation of determining a time point of performing a compliance check may be different in Schemes 1, 2, and 3.
- Scheme 1: When a candidate delta configuration is received and a complete configuration is formed accordingly, the following sub-schemes may be additionally considered.
   ▪ Scheme 1-1: When a complete configuration is formed, the UE may perform a compliance check.
      ◆ If the UE performs and succeeds in the compliance check, the complete configuration may be used when a cell switch is performed.
      ◆ If the UE performs and fails in the compliance check, the UE stores the complete configuration. The complete configuration may be stored in a UE variable which is the same as or different from a UE variable storing an LTM candidate delta configuration. The complete configuration may be associated with an indicator referred to as a compliance check failed configuration and be stored in a storage variable. When a cell switch command is received after the storage, the UE may identify whether a previous compliance check for a complete configuration for a target cell indicated together with the command has succeeded or failed. If the compliance check has succeeded, the UE may apply the corresponding configuration without change and perform a cell switch. If the compliance check has failed, the UE may continue using a configuration used prior to when the cell switch command is received, and perform an RRC Reestablishment procedure.
      ◆ In a case of Scheme 1-1, a compliance check is performed for multiple configurations, thereby enabling faster cell switching compared to when a compliance check is performed at a time point of performing a cell switch.
   ▪ Scheme 1-2: The UE may perform a compliance check at a time point of receiving a cell switch command.
      ◆ If the compliance check has failed, the UE may continue using a configuration used prior to when the cell switch command is received, and perform an RRC reestablishment procedure.
      ◆ In Scheme 1-2, a compliance check is performed for only one complete configuration, thereby reducing the processing load and power consumption of the UE.
   ▪ Scheme 1-3: A compliance check may be performed at any time point according to a UE implementation. The compliance check may be performed at any time point between a time point at which a complete configuration is formed and a time point at which a cell switch command is received.
      ◆ Failure handling: If the UE performs and fails in a compliance check before a cell switch command is received (unable to comply with that configuration), failure handling of Scheme 1-1 may be applied in the same manner. If the UE performs a compliance check at a time point at which a cell switch command is received, failure handling of Scheme 1-2 may be applied in the same manner.
      ◆ In Scheme 1-3, if a compliance check fails regardless of a time point at which the compliance check is performed, the UE may continue using a configuration used prior to when the compliance check of a corresponding complete configuration is performed, and perform an RRCReestablishment procedure.
- Scheme 2: The UE may form a complete configuration at a time point at which a cell switch command is received and when a candidate delta configuration is stored in the UE. For a time point of performing a compliance check for the complete configuration, the following sub-schemes may be considered.
   ▪ Scheme 2-1: A compliance check may be performed at a time point at which a complete configuration is formed. (This case is the same as when a cell switch command is received)
      ◆ Failure handling: If a compliance check fails, the UE may continue using a configuration used prior to when a cell switch command is received ("before a cell switch command is received" in the disclosure may indicate immediately before the cell switch command is received), and perform an RRC Reestablishment procedure.
- Scheme 3: The UE may form a complete configuration at any time point between a time point at which a candidate delta configuration is received and a time point at which a cell switch command is received (including both of the time points), and may perform a compliance check at any time point according to a UE implementation after the complete configuration is formed.
   ▪ Scheme 3-1: The UE may perform a compliance check at any time point between a time point at which a candidate delta configuration is received and a time point at which a cell switch command is received (including both of the time points). Herein, a time point of performing the compliance check may be a time point after a complete configuration is formed.
      ◆ Failure handling: If the UE performs and fails in a compliance check before a cell switch command is received (unable to comply with that configuration), failure handling of Scheme 1-1 may be applied in the same manner. If the UE performs a compliance check at the moment at which a cell switch command is received, and fails in the compliance check, failure handling of Scheme 1-2 may be applied in the same manner.
      ◆ In Scheme 3-1, if a compliance check fails regardless of a time point at which the compliance check is performed, the UE may continue using a configuration used prior to when the compliance check of a corresponding complete configuration is performed, and perform an RRCReestablishment procedure.

Hereinafter, a method of determining a unit of storage when a UE stores a reference configuration, a candidate delta configuration, and/or a complete configuration in a storage variable according to various embodiments described above is described.

In a case of Method 1/Scheme 1 mentioned above, the UE may form a complete configuration when a candidate delta configuration is received, and store the complete configuration in a UE variable for an LTM configuration together with an LTM configuration ID associated with the complete configuration.

In a case of Method 2/Scheme 2 mentioned above, the UE may store a reference configuration and/or candidate delta configuration in a UE variable for an LTM configuration together with an LTM configuration ID. This is for storing the configurations in a form at the reception time point of the configurations because the complete configuration is formed after the reception time point of the configurations.

In a case of Method 3/Scheme 3 mentioned above, the UE may store a reference configuration and/or candidate delta configuration in a UE variable for an LTM configuration together with an LTM configuration ID in the same manner as in Method 2/Scheme 2.

In various embodiments described in the disclosure, all objects stored in a UE variable, for example, a complete configuration (in a case of Method 1/Scheme 1), and/or a candidate delta configuration (in a case of Methods 2 and 3/Schemes 2 and 3) may be given to the UE in a list form and added to a variable, or an ID may be indicated to modify or release each object.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
obtaining, from a base station, an L1/L2 triggered mobility (LTM) reference configuration and one or more LTM candidate configurations;
receiving, from the base station, a cell switch command indicating an LTM candidate configuration among the one or more LTM candidate configurations;
based on whether a particular indicator is included in the LTM candidate configuration indicated by the cell switch command, determining whether the LTM candidate configuration indicated by the cell switch command is a complete configuration; and
in case that the LTM candidate configuration indicated by the cell switch command is not a complete configuration, applying a radio resource control (RRC) reconfiguration message included in the LTM candidate configuration indicated by the cell switch command to the LTM reference configuration.

2. The method of claim 1, wherein the one or more LTM candidate configurations are stored in a terminal variable in a list form, and are added, modified, or released based on each LTM candidate identifier.

3. The method of claim 1, further comprising:
performing a compliance check associated with the RRC reconfiguration message; and
in case that the compliance check fails, continuing using a configuration used prior to a time point at which the failure of the compliance check is detected.

4. The method of claim 3, further comprising, in case that the compliance check fails, performing an RRC reestablishment procedure.

5. A method performed by a base station in a wireless communication system, the method comprising:
according to whether each of one or more L1/L2 triggered mobility (LTM) candidate configurations is a complete configuration, determining whether to include a particular indicator in each of the one or more LTM candidate configurations;
transmitting to a terminal, an LTM reference configuration and the one or more LTM candidate configurations; and
transmitting, to the terminal, a cell switch command indicating an LTM candidate configuration among the one or more LTM candidate configurations,
wherein, in case that the LTM candidate configuration indicated by the cell switch command is not a complete configuration, a radio resource control (RRC) reconfiguration message included in the LTM candidate configuration indicated by the cell switch command is applied to the LTM reference configuration.

6. The method of claim 5, wherein the one or more LTM candidate configurations are transmitted in a list form, and are added, modified, or released based on each LTM candidate identifier.

7. The method of claim 5, wherein, in case that a compliance check associated with the RRC reconfiguration message fails, using a configuration used prior to a time point at which the failure of the compliance check is detected is continued.

8. The method of claim 7, further comprising, in case that the compliance check associated with the RRC reconfiguration message fails, performing an RRC reestablishment procedure.

9. A terminal in a wireless communication system, the terminal comprising:
a transceiver; and
a controller coupled to the transceiver,
wherein the controller is configured to:
obtain from a base station, an L1/L2 triggered mobility (LTM) reference configuration and one or more LTM candidate configurations,
receive, from the base station, a cell switch command indicating an LTM candidate configuration among the one or more LTM candidate configurations,
based on whether a particular indicator is included in the LTM candidate configuration indicated by the cell switch command, determine whether the LTM candidate configuration indicated by the cell switch command is a complete configuration, and
in case that the LTM candidate configuration indicated by the cell switch command is not a complete configuration, apply, a radio resource control (RRC) reconfiguration message included in the LTM candidate configuration indicated by the cell switch command to the LTM reference configuration.

10. The terminal of claim 9, wherein the one or more LTM candidate configurations are stored in a terminal variable in a list form, and are added, modified, or released based on each LTM candidate identifier.

11. The terminal of claim 9, wherein the controller is configured to:
perform a compliance check associated with the RRC reconfiguration message, and
in case that the compliance check fails, continue using a configuration used prior to a time point at which the failure of the compliance check is detected.

12. The terminal of claim 11, wherein the controller is configured to, in case that the compliance check fails, perform an RRC reestablishment procedure.

13. A base station in a wireless communication system, the base station comprising:
a transceiver; and
a controller coupled to the transceiver,
wherein the controller is configured to:
according to whether each of one or more L1/L2 triggered mobility (LTM) candidate configurations is a complete configuration, determine whether to include a particular indicator in each of the one or more LTM candidate configurations,
transmit, to a terminal, an LTM reference configuration and the one or more LTM candidate configurations, and
transmit, to the terminal, a cell switch command indicating an LTM candidate configuration among the one or more LTM candidate configurations,
wherein, in case that the LTM candidate configuration indicated by the cell switch command is not a complete configuration, a radio resource control (RRC) reconfiguration message included in the LTM candidate configuration indicated by the cell switch command is applied to the LTM reference configuration.

14. The base station of claim 13, wherein the one or more LTM candidate configurations are transmitted in a list form, and are added, modified, or released based on each LTM candidate identifier.

15. The base station of claim 13, wherein, in case that a compliance check associated with the RRC reconfiguration message fails, using a configuration used prior to a time point at which the failure of the compliance check is detected is continued, and
wherein the controller is configured to, in case that the compliance check associated with the RRC reconfiguration message fails, perform an RRC reestablishment procedure.
